# FASCICULE DE BREVET EUROPEEN

(11) **EP 2 951 899 B1**
(45) Date de publication et mention de la délivrance du brevet: **13.09.2017**
(21) Numéro de dépôt: 13821874.8
(22) Date de dépôt: 17.12.2013
(51) Int. Cl.: H02G 3/12

(54) **BOITE D'ENCASTREMENT EN DEUX PARTIES**
ZWEITEILIGER INSTALLATIONSKASTEN
TWO-PART INSTALLATION BOX

(30) Priorité: 01.02.2013 FR 1350901
(43) Date de publication de la demande: 09.12.2015
(73) Titulaire: Legrand France, 87000 Limoges (FR); Legrand SNC, 87000 Limoges (FR)
(72) Inventeur: CAILLE, Jean-Loup, F-87510 Peyrilhac (FR)
(74) Mandataire: Orsini, Fabienne
(86) Numéro de dépôt international: PCT/FR2013/053131
(87) Numéro de publication internationale: WO 2014/118445

(56) Documents cités:
- EP-A2- 1 798 831
- FR-A3- 2 797 357
- US-A- 3 716 651
- US-A- 4 669 804

## Description

### DOMAINE TECHNIQUE AUQUEL SE RAPPORTE L'INVENTION

La présente invention concerne de manière générale l'encastrement d'appareillages électriques à l'intérieur de diverses parois.

Elle concerne plus particulièrement une boîte d'encastrement qui comprend :
- une paroi latérale qui délimite un espace intérieur de réception d'au moins un module d'appareillage, et
- une enveloppe isolante qui enferme de manière indémontable des éléments de connexion électrique et qui est pourvue d'au moins une entrée pour l'introduction de conducteurs d'alimentation électrique à connecter auxdits éléments de connexion.

L'invention trouve une application particulièrement avantageuse dans la réalisation d'une boîte d'encastrement pour cloison creuse, destinée à recevoir divers modules d'appareillage électrique tels qu'un module d'interrupteur, de va-et-vient, de variateur électrique, de prise de courant, de prise réseau (RJ45), de prise de téléphone (RJ11), de voyant, ou encore de détecteur (de fumée, d'inondation, de température, de mouvement ou de lumière).

### ARRIERE-PLAN TECHNOLOGIQUE

Généralement, les boîtes d'encastrement comportent, intérieurement, des moyens d'assujettissement d'un support d'appareillage, et, extérieurement, des moyens de fixation à la paroi. Le support d'appareillage permet de monter tout type de mécanisme d'appareillage dans le volume intérieur de la boîte d'encastrement, par simple encliquetage de ce mécanisme d'appareillage sur le support d'appareillage.

En outre, usuellement, les boîtes d'encastrement connues comportent en partie arrière des opercules défonçables qui permettent d'ouvrir localement des passages pour les conducteurs électriques nécessaires à la desserte du mécanisme d'appareillage rapporté sur le support d'appareillage.

Les boîtes d'encastrement présentent des tailles standards, généralement avec un diamètre de 68 millimètres et une profondeur de 50 millimètres.

Le volume intérieur d'une telle boîte d'encastrement est alors réduit et il n'est pas aisé de connecter les conducteurs électriques au mécanisme d'appareillage. Il n'est pas davantage pratique de loger dans la boîte d'encastrement non seulement le mécanisme d'appareillage monté sur le support d'appareillage, mais également les extrémités des conducteurs électriques qui ont été tirées dans le volume intérieur de la boîte d'encastrement afin de les connecter au mécanisme d'appareillage (du fait notamment de la rigidité des conducteurs électriques qu'il faut replier entre le mécanisme d'appareillage et la paroi de fond du corps de la boîte).

Ce volume intérieur restreint par ailleurs les possibilités d'évolution des appareillages électriques qui, en raison de leurs tailles limitées, ne peuvent en effet pas intégrer toutes les fonctions souhaitées.

On connaît par ailleurs du document US4669804 un appareillage électrique qui comporte un mécanisme d'appareillage adapté à être logé dans une boîte électrique équipée de bornes de connexion au réseau électrique local.

Dans ce document, la boîte électrique est décrite comme comportant un corps qui loge lesdites bornes de connexion, et un bloc arrière à rapporter à l'arrière du corps.

Le bloc arrière est plus précisément conçu pour refermer l'espace qui loge les bornes de connexion et pour guider trois fils électriques dans ces bornes. Ce bloc arrière est agencé de telle manière qu'il ne nécessite pas de couper les trois fils électriques. Au contraire, il est prévu pour connecter la boîte électrique sur le chemin des trois fils électriques.

L'inconvénient majeur de cette boîte électrique est que la connexion des fils électriques aux bornes est difficile à mettre en oeuvre. En effet, cette connexion nécessite d'avoir accès à l'arrière de la paroi pour positionner les fils électriques dans le bloc arrière, puis pour rapporter le bloc arrière sur le corps. En pratique, l'installateur a rarement accès à l'arrière de la paroi.

Un autre inconvénient de cette boîte électrique est que, telle qu'elle est décrite, la connexion des fils électriques nécessite de rapporter le bloc arrière contre le corps, selon un mouvement de translation, ce qui s'avère compliqué à mettre en oeuvre.

Enfin, l'utilisation d'un corps comportant un fond et d'un bloc arrière comportant aussi un fond nécessite un volume important de matière plastique pour fabriquer la boîte électrique, ce qui engendre un coût de production élevé , comme dans le document EP1 798 831.

### OBJET DE L'INVENTION

Afin de remédier aux inconvénients précités de l'état de la technique, la présente invention propose une nouvelle boîte d'encastrement plus facile d'utilisation et offrant davantage d'espace pour la connexion d'un module d'appareillage électrique.

Plus particulièrement, on propose selon l'invention une boîte d'encastrement telle que définie dans l'introduction, dans laquelle il est prévu que l'enveloppe isolante est fixée de manière démontable sur ladite paroi latérale pour former le fond de ladite boîte d'encastrement ainsi qu'un prolongement axial de sa paroi latérale.

Ainsi, la boîte d'encastrement se présente en deux parties, dont une partie avant (la paroi latérale) et une partie arrière (l'enveloppe isolante), cette dernière logeant par ailleurs les éléments de connexion électrique.

L'extraction de la partie avant permet alors d'accéder facilement aux éléments de connexion électrique logés dans la partie arrière, pour y connecter les conducteurs d'alimentation électrique.

La position des éléments de connexion électrique, dans le fond de la boîte d'encastrement à proximité des conducteurs d'alimentation électrique, permet par ailleurs de tirer sur une longueur réduite ces conducteurs d'alimentation électrique à l'intérieur de la boîte d'encastrement afin de les connecter aux éléments de connexion électrique, ce qui libère de l'espace dans la boîte d'encastrement.

Autrement formulé, si les éléments de connexion électrique étaient fixés à la paroi latérale, il serait nécessaire de tirer les conducteurs électriques hors de la paroi sur une longueur importante, afin de leur faire traverser l'ouverture pratiquée dans l'enveloppe isolante puis de les connecter aux éléments de connexion électrique. Il faudrait alors ensuite refouler ces conducteurs d'alimentation électrique dans la paroi, ce qui s'avèrerait en pratique difficile à mettre en oeuvre, du fait de la rigidité de ces conducteurs.

D'autres caractéristiques avantageuses et non limitatives de la boîte d'encastrement conforme à l'invention sont les suivantes :
- ladite enveloppe isolante comporte une paroi de fond qui forme le fond de ladite boîte d'encastrement et qui est bordée par un rebord avant qui prolonge axialement ladite paroi latérale ;
- ladite enveloppe isolante comporte une coque qui est fixée de manière indémontable à la paroi de fond et qui délimite avec celle-ci un logement d'accueil des éléments de connexion électrique ;
- ladite entrée s'étend au moins partiellement à distance du rebord avant ;
- ladite enveloppe isolante présente, à la jonction entre la paroi de fond et le rebord avant et à distance de ladite coque, un méplat incliné dans lequel est située ladite entrée ;
- ladite coque présente au moins une ouverture d'introduction et au moins une ouverture d'accès permettant respectivement de connecter les conducteurs d'alimentation électrique et ledit module d'appareillage électrique aux éléments de connexion électrique logés à l'intérieur dudit logement d'accueil ;
- chaque ouverture d'introduction est tournée vers ladite entrée ;
- il est prévu des moyens de fixation démontables de l'enveloppe isolante sur ladite paroi latérale, qui comportent au moins une dent en saillie de la face intérieure dudit rebord avant, à laquelle est adaptée à s'accrocher à une partie d'accroche de ladite paroi latérale ;
- ladite partie d'accroche comporte, en saillie de la face intérieure de la paroi latérale, au moins une patte qui est orientée vers l'arrière et qui présente une ouverture dont l'un des bords est adapté à s'accrocher à ladite dent ;
- la paroi latérale porte au moins deux pattes régulièrement réparties le long de son contour et le rebord avant comporte un nombre identique de dents réparties de manière correspondante ; et
- ladite paroi latérale comporte des moyens d'attache à une cloison creuse et des moyens d'assujettissement du module d'appareillage électrique.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective éclatée d'une boîte d'encastrement selon l'invention à encastrer dans une paroi ;
- les figures 2 et 3 sont des vues de détail des zones II et III de la figure 1 ;
- les figures 4 à 6 sont des vues schématiques illustrant les étapes d'installation de la boîte d'encastrement de la figure 1 dans la paroi.

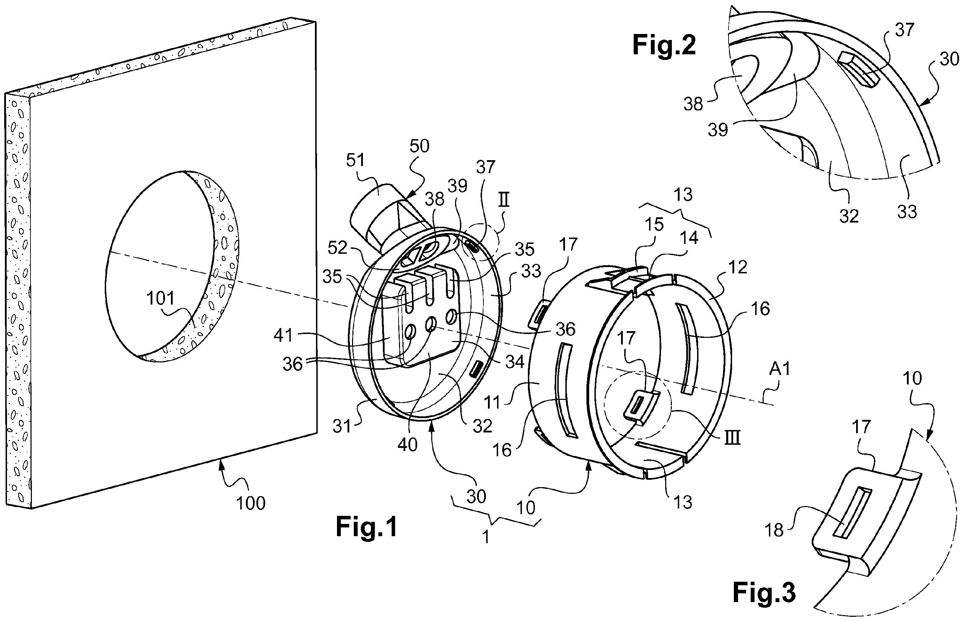

Sur la figure 1, on a représenté une boîte d'encastrement 1.

Par « boîte d'encastrement », on entend une boîte qui comporte des moyens de fixation en position encastrée dans une paroi et qui comporte des moyens d'assujettissement d'un module d'appareillage.

Ici, cette boîte d'encastrement 1 est conçue pour être encastrée dans une cavité 101 pratiquée dans une paroi 100, et pour accueillir un module d'appareillage électrique (non représenté) afin de le bloquer dans la paroi 100 et de le protéger. Par module d'appareillage électrique, on entend tout type de module tel qu'un module de prise de courant, d'interrupteur, de va-et-vient, de variateur électrique, de prise réseau (RJ45), de prise de téléphone (RJ11), de voyant, ou encore de détecteur (de fumée, d'inondation, de température, de mouvement ou de lumière). Ce module d'appareillage électrique ne faisant pas l'objet de la présente invention, il ne sera pas ici décrit.

Dans le mode de réalisation représenté sur les figures, la boîte d'encastrement 1 est plus précisément prévue pour être encastrée dans une cloison creuse.

On rappelle à ce sujet que, de manière connue, une telle cloison creuse est généralement composée d'une ossature métallique (formée de montants verticaux et de rails horizontaux non représentés) et de panneaux de plâtre 100 rapportés sur l'une au moins des deux faces de l'ossature métallique.

Comme le montre la figure 1, la cavité pratiquée dans cette cloison creuse est ici simplement formée par une ouverture circulaire 101 réalisée à la scie cloche dans l'un des panneaux de plâtre 100.

Dans la description, les termes « avant » et « arrière » seront alors utilisés par rapport à la direction du regard de l'installateur de la boîte d'encastrement 1 dans cette ouverture circulaire 101. Ainsi, les termes avant et arrière désigneront respectivement le lieu tourné vers l'extérieur de la cloison creuse et le lieu tourné vers l'intérieur de la cloison creuse.

La boîte d'encastrement 1 est réalisée en deux parties avant 10 et arrière 30.

La partie avant 10 comporte une paroi latérale 11 qui délimite un espace intérieur de réception du module d'appareillage électrique.

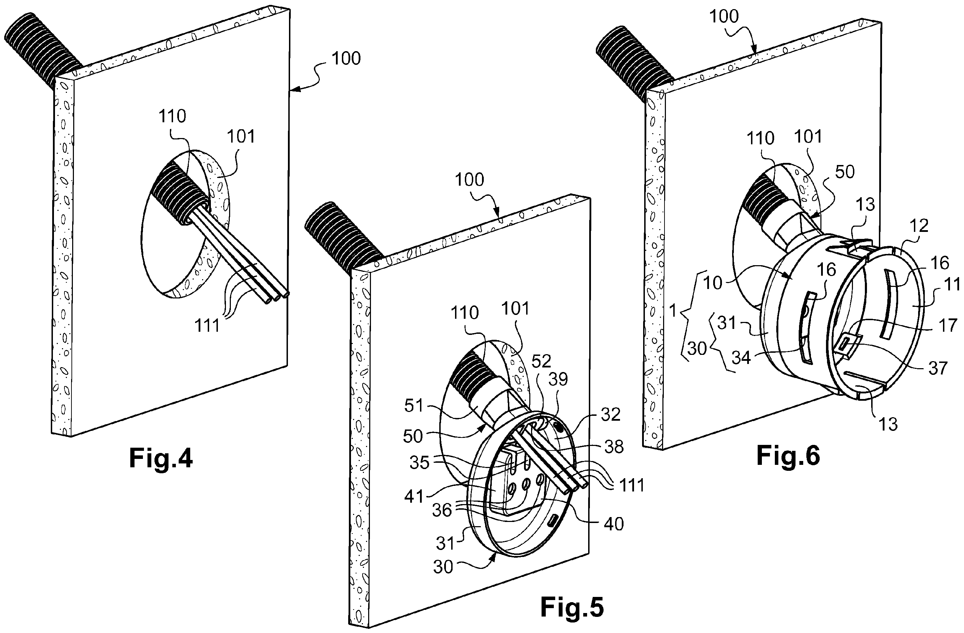

La partie arrière 30 comporte quant à elle une enveloppe isolante 31 qui est pourvue d'au moins une entrée 38 pour l'introduction de conducteurs d'alimentation électrique à l'intérieur de la boîte d'encastrement 1. Comme le montre la figure 5, elle est ici plus précisément prévue pour permettre le passage de trois fils électriques 111 de phase, de neutre et de terre issus du réseau électrique local.

Cette enveloppe isolante 31 enferme de manière indémontable des éléments de connexion électrique, ici au nombre de trois, auxquels il est prévu de connecter, d'un côté, les fils électriques 111, et, de l'autre, le module d'appareillage électrique.

Selon une caractéristique particulièrement avantageuse de l'invention, cette enveloppe isolante 31 comporte des moyens de fixation 37 démontables à la paroi latérale 11, qui lui permettent de former non seulement le fond de la boîte d'encastrement 1 mais aussi un prolongement axial de la paroi latérale 11 lorsqu'elle est fixée à cette dernière.

Comme le montre la figure 1, l'enveloppe isolante 31 comporte plus précisément une paroi de fond 32 qui est bordée par un rebord avant 33 et qui porte en face avant une coque 34.

La paroi de fond 32 est une paroi circulaire pleine, d'axe principal A1.

Le rebord avant 33 présente quant à lui une forme cylindrique de révolution autour de l'axe principal A1. Il se raccorde au bord de la paroi de fond 32 par une partie incurvée, de manière que la boîte d'encastrement 1 ne présente pas d'arête arrière franche.

Une partie au moins de la section de l'entrée 38 (qui permet le passage des fils électriques 111) est alors prévue pour s'étendre à distance de ce rebord avant 33. En effet, si cette entrée s'étendait entièrement dans le rebord avant, les fils électriques seraient contraints de sortir latéralement de la boîte électrique 1, si bien qu'ils formeraient obstacle à l'engagement de cette boîte au travers de l'ouverture circulaire 101 pratiquée dans le panneau de plâtre 100.

En pratique, on pourrait prévoir que cette entrée s'étende entièrement dans la paroi de fond de l'enveloppe isolante, ou à cheval sur la paroi de fond et sur le rebord avant de l'enveloppe isolante.

Ici, l'enveloppe isolante 31 comporte plutôt, à cheval sur la paroi de fond 32 et sur le rebord avant 33, un méplat 39 incliné à trente degrés environ par rapport à la paroi de fond 32.

Ce méplat 39 présente un contour ovale.

L'entrée 38 de passage de fils électriques 111 est alors prévue dans ce méplat 39. Elle présente une forme oblongue.

La coque 34, qui est prévue sur la face avant de la paroi de fond 32, permet de loger les éléments de connexion électrique. Comme le montre bien la figure 1, cette coque 34 est plus précisément conçue pour loger complètement les éléments de connexion électrique, de telle manière que ces derniers ne fassent pas saillie à l'extérieur de la coque, au bénéfice de la sécurité électrique de l'ensemble.

Cette coque 34 est ici centrée sur la face avant de la paroi de fond 32 si bien qu'elle s'étend à distance du méplat 39.

Elle présente une forme parallélépipédique, avec une paroi frontale 40 plane et carrée, et une paroi latérale 41 de faible hauteur (ici égale à celle du rebord avant 33) qui raccorde la paroi frontale 40 à la paroi de fond 32 de l'enveloppe isolante 31.

La coque 34 est alors fixée par la tranche arrière de sa paroi latérale 41 à la paroi de fond 32, de manière indémontable, pour délimiter avec celle-ci un logement d'accueil des éléments de connexion électrique.

La paroi de fond 32, le rebord avant 33 et la coque 34 étant ici tous réalisés en matière plastique, la fixation de la coque 34 à la paroi de fond 32 est ici opérée par thermo-soudage. Elle pourrait bien entendue être réalisée autrement, notamment par collage, par rivetage ou encore par encliquetage irréversible.

La coque 34 présente au moins une ouverture d'introduction 35 des fils électriques 111 dans le logement d'accueil des éléments de connexion électrique. Elle présente ici trois ouvertures d'introduction 35 distinctes, chacune prévue pour le passage de l'un des fils électriques 111.

En l'espèce, ces ouvertures d'introduction 35 sont formées par des fentes parallèles qui s'étendent sur une partie de la paroi frontale 40 de la coque 34, et sur toute la hauteur de l'un des côtés de la paroi latérale 41 de la coque 34, celui tourné vers le méplat 39.

La coque 34 présente par ailleurs au moins une ouverture d'accès 36 permettant de connecter le module d'appareillage électrique aux éléments de connexion électrique. Elle présente ici trois ouvertures d'accès 36 distinctes, chacune prévue pour l'accès à l'un des éléments de connexion électrique.

Ici, ces ouvertures d'accès 36 sont circulaires et situées côte à côte sur la paroi frontale 40 de la coque 34, dans le prolongement des trois ouvertures d'introduction 35.

Les éléments de connexion électrique logés à l'intérieur de la coque 34 ne sont pas représentés sur les figures.

Ils sont tous identiques et isolés électriquement les uns des autres par deux cloisons parallèles prévues à l'intérieur de la coque 34.

Ils comportent chacun une borne d'entrée, accessible par l'une des ouvertures d'introduction 35, pour la connexion de l'un des fils électriques 111.

Ils comportent également chacun une borne de sortie, accessible par l'une des ouvertures d'accès 36, pour la connexion du module d'appareillage électrique.

La borne d'entrée de chaque élément de connexion électrique est ici automatique. Elle se présente sous la forme de deux lames-ressort pliées de telle manière qu'elles délimitent ensemble un conduit d'insertion et de blocage d'une extrémité dénudée de l'un des fils électriques 111.

La borne d'entrée pourra en variante être du type semi-automatique, en se présentant par exemple sous la forme d'une lame métallique tranchante équipée d'un levier de manoeuvre, ce levier de manoeuvre étant alors adapté à repousser l'extrémité de l'un des fils électriques contre cette lame métallique tranchante pour la dénuder automatiquement et pour établir la connexion électrique.

La borne d'entrée pourra encore en variante être du type manuel, en se présentant par exemple sous la forme d'une lame métallique équipée d'une vis qui, une fois vissée, comprimera l'extrémité dénudée de l'un des fils électriques contre cette lame métallique pour établir la connexion électrique.

La borne de sortie de chaque élément de connexion se présente quant à elle sous la forme d'une alvéole métallique qui vient de formation avec lesdites deux lames-ressort et qui est située dans l'axe de l'une des ouvertures d'accès. Cette borne de sortie est conçue de telle sorte qu'une broche prévue à l'arrière du module d'appareillage électrique puisse s'y engager afin d'établir la connexion électrique.

La borne de sortie pourra en variante se présenter sous la forme d'une broche faisant saillie à l'avant de la coque, au travers de l'une des ouvertures d'accès, afin de pouvoir s'engager dans une alvéole prévue en correspondance à l'arrière du module d'appareillage électrique afin d'établir la connexion électrique.

La borne de sortie pourra encore en variante se présenter sous la forme d'un connecteur à piston, mobile au travers de l'ouverture d'accès, et qui viendra au contact d'une zone plane de connexion prévue en correspondance à l'arrière du module d'appareillage électrique afin d'établir la connexion électrique.

Comme le montre la figure 1, la paroi latérale 11 de la partie avant 10 de la boîte d'encastrement 1 est ici cylindrique de révolution autour de l'axe principal A1. Elle présente un diamètre et une épaisseur égaux aux diamètre et épaisseur du rebord avant 33 de l'enveloppe isolante 31 de la partie arrière 30 de la boîte d'encastrement 1.

Comme le montre la figure 2, les moyens de fixation prévus sur la partie arrière 30 de la boîte d'encastrement 1 pour se fixer à la partie avant 10 de la boîte d'encastrement 1 comportent au moins une ou deux dents 37 en saillie de la face intérieure du rebord avant 33.

En pratique, il est ici prévu quatre dents 37 régulièrement réparties autour de l'axe principal A1, de forme globalement parallélépipédique, qui sont allongées dans un plan orthogonal à l'axe principal A1.

En correspondance du nombre de dents 37, comme le montre la figure 3, la partie avant 10 de la boîte d'encastrement 1 comporte des pattes 17 adaptées à s'accrocher à ces dents 37.

Ces pattes 17 s'étendent à partir de la face intérieure de la paroi latérale 11 et s'étendent en longueur vers l'arrière. Ainsi, lorsque les parties avant 10 et arrière 30 de la boîte d'encastrement 1 sont amenées dans l'axe l'une de l'autre pour être assemblées, ces pattes 17 sont prévues pour coulisser le long de la face intérieure du rebord avant 13 de l'enveloppe isolante 31 de la partie arrière 30 de la boîte d'encastrement 1, puis pour fléchir pour s'engager sur les dents 37.

Les pattes 17 présentent chacune une ouverture rectangulaire 18 de dimensions identiques, au jeu près, à celles des dents 37. Ainsi, les ouvertures rectangulaires 18 des pattes 17 sont prévues pour s'engager sur les dents 37. De cette manière, le bord arrière de chaque ouverture rectangulaire 18 est adapté à s'accrocher à la face arrière de chaque dent 37, ce qui bloque rigidement les parties avant 10 et arrière 30 de la boîte d'encastrement 1 l'une par rapport à l'autre.

L'arête avant de chaque dent 37 est ici biseautée de manière à former une rampe qui provoque la flexion des pattes 17 lorsqu'elles viennent au contact des dents 37, au cours de l'assemblage des deux parties avant 10 et arrière 30 de la boîte d'encastrement 1.

En variante, on aurait pu prévoir que les moyens de fixation des parties avant et arrière de la boîte d'encastrement se présentent sous une forme différente, pour autant que ces moyens de fixation soient démontables.

De préférence, les moyens de fixation seront choisis pour être automatiques, en ce sens qu'ils seront adaptés à bloquer ensemble les parties avant et arrière de la boîte d'encastrement, sans l'aide d'outil. En variante, ils pourraient être manuels, en se présentant par exemple sous le forme de vis solidaires de la partie avant de la boîte d'encastrement, adaptées à se visser dans des puits de vissage prévus en correspondance dans la partie arrière de la boîte d'encastrement.

Comme le montre la figure 1, la partie avant 10 de la boîte d'encastrement 1 comporte, d'une part, des moyens d'attache 12, 13 à la cloison creuse, et, d'autre part, des moyens d'assujettissement 16 du module d'appareillage électrique.

Les moyens d'attache comportent tout d'abord un trottoir extérieur 12 qui longe extérieurement le bord de l'ouverture avant de la paroi latérale 11 et qui est adapté à prendre appui contre la face avant du panneau de plâtre 100, tout autour de l'ouverture circulaire 101. Ainsi, ce trottoir extérieur 12 permet de bloquer la boîte d'encastrement 1 vers l'arrière.

Pour bloquer la boîte d'encastrement 1 vers l'avant, la paroi latérale 11 comporte ici des moyens d'encliquetage 13. Ces moyens d'encliquetage 13 se présentent sous la forme de deux pattes de flexion 14 diamétralement opposée qui sont découpées dans la paroi latérale 11 et qui portent chacune sur leurs faces externes une dent d'encliquetage 15 adaptée à s'accrocher à la face arrière du panneau de plâtre 100.

Bien entendu, ces moyens d'attache pourraient se présenter sous une forme différente. On pourrait notamment prévoir de remplacer les moyens d'encliquetage 13 par deux griffes qui interviendraient en position diamétralement opposée et qui, sous le contrôle de vis, seraient aptes à venir s'accrocher à la face arrière du panneau de plâtre.

Les moyens d'assujettissement 16 du module d'appareillage électrique se présentent quant à eux sous la forme de deux fenêtres rectangulaires 16 diamétralement opposées, découpées dans la paroi latérale 11. Elles permettent à des moyens d'encliquetage prévus sur le module d'appareillage électrique de s'y accrocher, de manière à bloquer rigidement ce module d'appareillage électrique dans la boîte d'encastrement 1.

Bien entendu, ces moyens d'assujettissement pourraient se présenter sous une forme différente. On pourrait notamment prévoir de remplacer les fenêtres rectangulaires 16 par des puits de vissage dans lesquels viendraient se visser des vis prévues sur le module d'appareillage électrique.

Comme le montre la figure 4, les trois fils électriques 111 issus du réseau électrique local circulent dans une gaine de cheminement 110 annelée en plastique qui est flexible et qui est engagée à l'intérieur de la cloison creuse.

Telle que représentée sur la figure 5, la gaine de cheminement 110 est connectée à la partie arrière 30 de la boîte d'encastrement 1 au moyen d'un embout 50 en plastique souple.

Cet embout 50 présente à cet effet une forme tubulaire, avec une première partie d'extrémité 51 dans laquelle est engagée une extrémité de la gaine de cheminement 110, et une seconde partie d'extrémité 52 qui s'accroche au bord de l'entrée 38 prévue dans le méplat 39 de la partie arrière 30 de la boîte d'encastrement 1.

Cet embout 50 assure ainsi une bonne protection électrique puisque si, pour une raison quelconque, l'un des fils électriques 111 s'arrache de la borne d'entrée de l'élément de connexion électrique correspondant, il demeure dans la gaine de cheminement 110 et reste bien isolé de l'extérieur.

L'installation de la boîte d'encastrement 1 dans l'ouverture circulaire 101 pratiquée dans le panneau de plâtre 100 est alors réalisée de la manière suivante.

Initialement, les parties avant 10 et arrière 30 de la boîte d'encastrement 1 sont en position assemblée.

L'installateur débute alors l'installation de la boîte d'encastrement 1 en séparant ces deux parties, à l'aide de l'extrémité d'un tournevis plat qu'il engage sous les pattes 17.

Comme le montre la figure 4, il tire ensuite l'extrémité libre de la gaine de cheminement 110 à l'extérieur de la cloison creuse, au travers de l'ouverture circulaire 101.

Comme le montre la figure 5, l'installateur engage alors la première partie d'extrémité 51 de l'embout 50 à l'extrémité de cette gaine de cheminement 110, en prenant soin de passer les trois fils électriques 111 au travers de cet embout 50, puis il bloque la seconde partie d'extrémité 52 de l'embout 50 dans l'ouverture 38 prévue dans le méplat 39 de la partie arrière 30 de la boîte d'encastrement 1.

Puisque la partie avant 10 de la boîte d'encastrement 1 est écartée et ne le gêne pas, l'installateur peut ensuite facilement engager les extrémités libres des trois fils électriques 111 dans les bornes d'entrée des éléments de connexion électrique, via les ouvertures d'introduction 35.

Comme le montre la figure 6, il rapporte alors la partie avant 10 de la boîte d'encastrement 1 sur la partie arrière 30, en encliquetant ses pattes 17 sur les dents 37 de la partie arrière 30.

Il engage ensuite la boîte d'encastrement 1 dans l'ouverture circulaire 101 pratiquée dans le panneau de plâtre 100, en prenant soin que ses dents d'encliquetage 13 s'accrochent bien à l'arrière du panneau de plâtre 1.

L'installateur peut ensuite encliqueter le module d'appareillage électrique dans la boîte électrique 1, puis rapporter une plaque de finition sur le module d'appareillage électrique pour cacher la boîte d'encastrement 1.

La présente invention n'est nullement limitée au mode de réalisation décrit et représenté, mais l'homme du métier saura y apporter toute variante conforme à son esprit.

En particulier, on pourra prévoir que la boîte d'encastrement présente une forme générale non pas cylindrique, mais plutôt parallélépipédique ou oblongue (afin d'accueillir plusieurs modules d'appareillage électrique).

On pourrait aussi prévoir que la cloison dans laquelle est engagée la boîte d'encastrement soit, non pas une cloison creuse, mais plutôt une cloison pleine. Dans cette variante, les moyens d'attache de la boîte d'encastrement à la cloison pleine seront alors formés par des nervure en saillie de la paroi latérale de la partie avant de la boîte, adaptées à s'accrocher aux bords de la cavité prévue en correspondance dans la cloison pleine.

## Revendications

1. Boîte d'encastrement (1) qui comprend :
- une enveloppe isolante (31) qui enferme de manière indémontable des éléments de connexion électrique et qui est pourvue d'au moins une entrée (38) pour l'introduction de conducteurs d'alimentation électrique (111) à connecter auxdits éléments de connexion, et
- une paroi latérale (11) qui délimite avec ladite enveloppe isolante (31) un espace intérieur de réception d'au moins un module d'appareillage électrique, **caractérisée en ce que** l'enveloppe isolante (31) est fixée de manière démontable sur ladite paroi latérale (11) pour former le fond de ladite boîte d'encastrement (1) ainsi qu'un prolongement axial de sa paroi latérale (11).

2. Boîte d'encastrement (1) selon la revendication précédente, dans laquelle ladite enveloppe isolante (31) comporte une paroi de fond (32) qui forme le fond de ladite boîte d'encastrement (1) et qui est bordée par un rebord avant (33) qui prolonge axialement ladite paroi latérale (11).

3. Boîte d'encastrement (1) selon la revendication précédente, dans laquelle ladite enveloppe isolante (31) comporte une coque (34) qui est fixée de manière indémontable à la paroi de fond (32) et qui délimite avec celle-ci un logement d'accueil des éléments de connexion électrique.

4. Boîte d'encastrement (1) selon l'une des deux revendications précédentes, dans laquelle ladite entrée (38) s'étend au moins partiellement à distance du rebord avant (33).

5. Boîte d'encastrement (1) selon les revendications 3 et 4, dans laquelle ladite enveloppe isolante (31) présente, à la jonction entre la paroi de fond (32) et le rebord avant (33) et à distance de ladite coque (34), un méplat incliné (39) dans lequel est située ladite entrée (38).

6. Boîte d'encastrement (1) selon l'une des trois revendications précédentes, dans laquelle ladite coque (34) présente au moins une ouverture d'introduction (35) et au moins une ouverture d'accès (36) permettant respectivement de connecter les conducteurs d'alimentation électrique (111) et ledit module d'appareillage électrique aux éléments de connexion électrique logés à l'intérieur dudit logement d'accueil.

7. Boîte d'encastrement (1) selon la revendication précédente, dans laquelle chaque ouverture d'introduction (35) est tournée vers ladite entrée (38).

8. Boîte d'encastrement (1) selon l'une des revendications 2 à 7, dans laquelle il est prévu des moyens de fixation démontables de l'enveloppe isolante (31) sur ladite paroi latérale (11), qui comportent au moins une dent (37) en saillie de la face intérieure dudit rebord avant (33), à laquelle est adaptée à s'accrocher à une partie d'accroche (17) de ladite paroi latérale (11).

9. Boîte d'encastrement (1) selon la revendication précédente, dans laquelle ladite partie d'accroche comporte, en saillie de la face intérieure de la paroi latérale (11), au moins une patte (17) qui est orientée vers l'arrière et qui présente une ouverture dont l'un des bords (18) est adapté à s'accrocher à ladite dent (37).

10. Boîte d'encastrement (1) selon la revendication précédente, dans laquelle la paroi latérale (11) porte au moins deux pattes (17) régulièrement réparties le long de son contour et le rebord avant (33) comporte un nombre identique de dents (37) réparties de manière correspondante.

11. Boîte d'encastrement (1) selon l'une des revendications précédentes, dans laquelle ladite paroi latérale (11) comporte des moyens d'attache (12, 13) à une cloison creuse et des moyens d'assujettissement (16) du module d'appareillage électrique.

## Patentansprüche

1. Installationskasten (1), der
- eine isolierende Hülle (31), die in nicht abnehmbarer Weise elektrische Verbindungselemente umschließt und die mit mindestens einem Zugang (38) zum Einbringen von mit den elektrischen Verbindungselementen zu verbindenden elektrischen Versorgungsleitern (111) versehen ist, und
- eine Seitenwand (11), die mit der isolierenden Hülle (31) einen Innenraum für die Aufnahme wenigstens eines elektrischen Gerätemoduls begrenzt,
aufweist,
**dadurch gekennzeichnet, daß** die isolierende Hülle (31) in abnehmbarer Weise an der Seitenwand (11) befestigt ist, um den Boden des Installationskastens (1) und eine axiale Verlängerung seiner Seitenwand (11) zu bilden.

2. Installationskasten (1) gemäß dem vorangehenden Anspruch, bei dem die isolierende Hülle (31) eine Bodenwand (32) aufweist, die den Boden des Installationskastens (1) bildet und die von einem vorderen Rand (33) umrandet ist, der die Seitenwand (11) axial verlängert.

3. Installationskasten (1) gemäß dem vorangehenden Anspruch, bei dem die isolierende Hülle (31) eine Schale (34) aufweist, die in nicht abnehmbarer Weise an der Bodenwand (32) angebracht ist und die mit selbiger einen Aufnahmeraum für die elektrischen Verbindungselemente begrenzt.

4. Installationskasten (1) gemäß einem der beiden vorangehenden Ansprüche, bei dem sich der Zugang (38) wenigstens teilweise vom vorderen Rand (33) entfernt erstreckt.

5. Installationskasten (1) gemäß den Ansprüchen 3 und 4, bei dem die isolierende Hülle (31) an der Verbindung zwischen der Bodenwand (32) und dem vorderen Rand (33) und in einem Abstand zur Schale (34) eine schräge Abflachung (39) aufweist, in der der Zugang (38) liegt.

6. Installationskasten (1) gemäß einem der drei vorangehenden Ansprüche, bei dem die Schale (34) wenigstens eine Einführöffnung (35) und wenigstens eine Zugangsöffnung (36) aufweist, die jeweils ermöglichen, die elektrischen Versorgungsleitungen (111) und die elektrischen Gerätemodule mit den im Inneren des Aufnahmeraums untergebrachten elektrischen Verbindungselementen zu verbinden.

7. Installationskasten (1) gemäß dem vorangehenden Anspruch, bei dem jede Einführöffnung (35) zum besagten Zugang (38) gerichtet ist.

8. Installationskasten (1) gemäß einem der Ansprüche 2 bis 7, bei dem abnehmbare Mittel zur Befestigung der isolierenden Hülle (31) an der Seitenwand (11) vorgesehen sind, die wenigstens einen aus der Innenseite des vorderen Rands (33) hervorstehenden Zahn (37) aufweisen, der dazu ausgelegt ist, sich an einem Einhakteil (17) der Seitenwand (11) einzuhaken.

9. Installationskasten (1) gemäß dem vorangehenden Anspruch, bei dem das Einhakteil aus der Innenseite der Seitenwand (11) hervorstehend wenigstens eine Klaue (17) aufweist, die nach hinten gerichtet ist und die eine Öffnung aufweist, von der einer der Ränder (18) dazu ausgelegt ist, sich an dem Zahn (37) einzuhaken.

10. Installationskasten (1) gemäß dem vorangehenden Anspruch, bei dem die Seitenwand (11) wenigstens zwei über deren Umfang gleichmäßig verteilte Klauen (17) trägt und der vordere Rand (33) eine gleich große Anzahl in entsprechender Weise verteilte Zähne (37) aufweist.

11. Installationskasten (1) gemäß einem der vorangehenden Ansprüche, bei dem die Seitenwand (11) Mittel (12, 13) zum Befestigen an einer hohlen Wand und Mittel (16) zum Befestigen des elektrischen Gerätemoduls aufweist.

## Claims

1. A flush-mounted box (1) that comprises:
• an insulating casing (31) that contains, in non-removable manner, electrical connection elements, and that is provided with at least one inlet (38) for inserting electric power conductors (111) for connecting to said connection elements; and
• a side wall (11) that co-operates with said insulating casing (31) to define an inside space for receiving at least one electrical accessory module;
the flush-mounted box being **characterized in that** the insulating casing (31) is fastened, in removable manner, to said side wall (11), so as to form the rear of said flush-mounted box (1) and an axial extension of its side wall (11).

2. A flush-mounted box (1) according to the preceding claim, wherein said insulating casing (31) includes a rear wall (32) that forms the rear of said flush-mounted box (1), and that is bordered by a front rim (33) that axially extends said side wall (11).

3. A flush-mounted box (1) according to the preceding claim, wherein said insulating casing (31) includes a shell (34) that is fastened, in non-removable manner, to the rear wall (32), and that co-operates with said rear wall to define a reception housing for receiving the electrical connection elements.

4. A flush-mounted box (1) according to either one of the two preceding claims, wherein said inlet (38) extends, at least in part, at a distance from the front rim (33).

5. A flush-mounted box (1) according to claim 3 and claim 4, wherein, at the junction between the rear wall (32) and the front rim (33), and at a distance from said shell (34), said insulating casing (31) presents a sloping flat (39) in which said inlet (38) is situated.

6. A flush-mounted box (1) according to any one of the three preceding claims, wherein said shell (34) presents at least one insertion opening (35) and at least one access opening (36) that make it possible to connect the electric power conductors (111) and said electrical accessory module respectively to said electrical connection elements that are housed inside said reception housing.

7. A flush-mounted box (1) according to the preceding claim, wherein each insertion opening (35) faces said inlet (38).

8. A flush-mounted box (1) according to any one of claims 2 to 7, wherein removable fastener means for removably fastening the insulating casing (31) are provided on said side wall (11), which removable fastener means comprise at least one tooth (37) that projects from the inside face of said front rim (33), and on which a catch portion (17) of said side wall (11) is adapted to catch.

9. A flush-mounted box (1) according to the preceding claim, wherein, projecting from the inside face of the side wall (11), said catch portion comprises at least one tab (17) that faces towards the rear and that presents an opening, one of the edges (18) of which is adapted to catch on said tooth (37).

10. A flush-mounted box (1) according to the preceding claim, wherein the side wall (11) carries at least two tabs (17) that are distributed regularly along its outline, and the front rim (33) includes an identical number of teeth (37) that are distributed in corresponding manner.

11. A flush-mounted box (1) according to any preceding claim, wherein said side wall (11) includes attachment means (12, 13) for attaching to a hollow partition, and securing means (16) for securing the electrical accessory module.
